# EUROPEAN PATENT SPECIFICATION

(11) **EP 0 690 098 B1**
(45) Date of publication and mention of the grant of the patent: **19.02.2003**
(21) Application number: 95304567.1
(22) Date of filing: 28.06.1995
(51) Int. Cl.: C08L 77/00, C08K 7/00, C08L 77/10

(54) **Filled polyphthalamide blends**
Füllstoffhaltige Polyphthalamid-Zusammensetzungen
Mélanges de polyphthalamide contenant des charges

(30) Priority: 29.06.1994 US 268249
(43) Date of publication of application: 03.01.1996
(73) Proprietor: Solvay Advanced Polymers, L.L.C., Alpharetta, GA 30005 (US)
(72) Inventor: Myers, Charles L., Palatine, Illinois 60067 (US); Garrett, David W., Marietta, Georgia 30062 (US)
(74) Representative: Schlich, George William

(56) References cited:
- EP-A- 0 225 039
- EP-A- 0 572 266
- US-A- 4 603 166
- US-A- 4 617 342
- DATABASE WPI Section Ch, Week 8528 Derwent Publications Ltd., London, GB; Class A23, AN 85-169009 XP002008854 & JP-A-60 099 163 ( TORAY IND INC) , 3 June 1985

## Description

### Background of the Invention

This invention relates to plateable thermoplastic resins, more particularly to plateable thermoplastic compositions comprising a polyamide, preferably a crystallizable or crystalline polyphthalamide, and still more particularly to blends comprising filled polyphthalamide having improved plating adhesion, and to plated articles comprising such blends.

The highly desirable balance of strength, stiffness and thermal properties of polyamides has gained these resins wide acceptance in the thermoplastic resin molding and extrusion arts, particularly for use in environments where chemical or thermal attack is likely to be encountered. Polyamide resins may be highly desirable for use where appearance characteristics in molded and extruded articles is important. They also find use in applications requiring plated articles, and particularly where the article will encounter moist environments, such as in plumbing parts and the like.

Polyamides, like most plastic resins, have a high coefficient of thermal expansion. Plated polyamide parts are subject to stress build-up in thermal cycling, resulting in loss of adhesion and plating failure. It has long been known that adding fillers, particularly finely divided clay and mineral fillers such as wollastonite, diatomaceous earth, talc and the like, may improve the-dimensional stability of thermoplastics as well as add to their rigidity. Parts molded from such dimensionally stable, filled thermoplastics generally exhibit reduced thermal stresses and, when plated, exhibit better thermal cycling performance and less plate failure.

Other difficulties in plating thermoplastics and particularly polyamides include inadequate initial adhesion between the plate layer and the part surface, which may result in cracked, crazed or blistered plating and unacceptable plated part appearance. Although etching and other surface treatments prior to plating have succeeded in reducing such problems, the art has continued to seek improvements in the plating of polyamides, and particularly to improve the plating appearance as well as plate adhesion during thermal cycling. Recently, the addition of a small amount of a silicone oil, up to about 5 wt%, to a resin composition comprising an aliphatic nylon such as nylon 6,6 or the like filled with wollastonite was disclosed as a method to improve plating appearance. In addition to improving smoothness and metallic luster in the plated part, the presence of the minor amount of silicon oil markedly increased heat resistance and plate adhesion.

Aliphatic nylons and the like do not possess the necessary thermal properties for use in many applications. The lower thermal properties of such resins, even when filled with as great as 40 wt% particulate filler or more, may also give problems in plating, particularly when the finished part will encounter additional processing steps such as the application of a thermally-cured protective or decorative coating. Consequently, the art has turned to the use of resins better able to withstand elevated temperatures, including high-heat or aromatic nylons, for such applications. Crystalline polyamides comprising at least about 40 mole% aliphatic terephthalamide units exhibit particularly good thermal, strength and stiffness properties, and low water absorption relative to nylon 6,6. Crystalline and crystallizable polyphthalamide resins are known in the art, and a variety of grades are readily available from commercial sources, including for example the Amodel® polyphthalamides from Amoco Performance Products, Inc. Such resins have relatively high melting points, generally about 290° C or higher, and the temperature of onset of thermal degradation for many does not greatly exceed their melting points, making the thermal processing of these resins a more rigorous and complex task, particularly for filled and reinforced polyphthalamides, than is encountered for lower melting polyamides including nylon 6,6, melting at about 260-265° C. The use of such polyphthalamides filled with wollastonite in plating applications has also been disclosed in the art.

The plating characteristics of such high temperature resins may be significantly different than found in formulations based on aliphatic nylons. Good plate adhesion is more difficult to attain, even with the use of additives such as silicone oils and like methods successfully employed with plating formulations based on aliphatic nylons. Considerable effort has been expended in seeking ways to improve plate adhesion for these high temperature polyamides, including use of better surface treatments and alternative fillers. However, the art continues to require improvement in plate adhesion for the plateable formulations based on these high-temperature polyphthalamide resins and a method for improving the plating characteristics of such formulations would clearly advance the art.

### Brief Summary of the Invention

This invention is directed to filled, thermoplastic polyamide compositions for use in plating applications, and, more particularly, to a blend for use in plating applications comprising a polyphthalamide, a particulate filler, a minor amount of silicone oil and a rubber modifier. The invention further contemplates plateable and plated articles comprising polyphthalamide blends, and provides a method for improving plate adhesion in plated articles comprising polyamides.

### Detailed Description of the Invention

The improved compositions of this invention are filled blends comprising a polyphthalamide, a filler, a silicone oil and a rubbery olefinic polymer having reactive functionality.

The polyamides useful according to the teachings of the invention will include the various thermoplastic polyamide homopolymers and copolymers known and widely used in the art. Particularly suitable are the high-temperature, aromatic-aliphatic polyphthalamides and copolymer analogs thereof, frequently termed aromatic nylons, that require high processing temperatures and are thus difficult to melt process without deterioration. Particularly preferred as aromatic nylons are the crystalline or semicrystalline high temperature copolyamides comprising alkylene terephthalamide structural units. The alkylene terephthalamide units may be more particularly described as terephthalamides derived from terephthalic acid and at least one C₂-C₁₄ alkylene diamine such as, for example, hexamethylene diamine or the like and including the various cyclic analogs thereof, as well as alkyl-substituted analogs of such compounds having one or more C₁-C₄ alkyl substituents attached to the hydrocarbon portion thereof, for example 2-methylpentamethylene diamine, 2,4-dimethylhexamethylene diamine and the like. The alkylene terephthalamide structural units may also be described and characterized by the following structural representation: 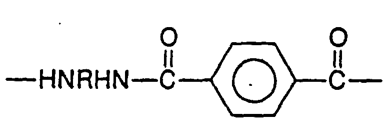 wherein R comprises at least one alkylene radical.

Preferably, alkylene radicals R in the above formula comprise at least one straight chain or branched, unsubstituted or alkyl-substituted alkylene or cycloalkylene radical having from about 4 to about 14 carbon atoms. Polyphthalamides comprising the preferred alkylene radicals are capable of exhibiting good crystallinity and desirable high temperature properties, together with melting and thermal degradation temperatures making them well-suited for melt processing and forming blends with the modifying components of the invented compositions. Specific examples of suitable alkylene radicals include tetramethylene, hexamethylene, dodecamethylene and the like, alkyl-substituted analogs thereof such as 2-methylpentamethylene, 2,4-dimethylhexamethylene, 2,2,4-trimethylhexamethylene and the like, and cyclic analogs such as p-cyclohexyl and the like. Most preferably, R in the formula comprises a hexamethylene radical either alone or as a mixture with additional aliphatic 4 to 14 carbon atom radicals.

In addition to the terephthalamide units, the polyamide may include one or more additional amide units derived from such alkylene diamines and aromatic dicarboxylic acids or suitably reactive derivative compounds thereof including, for example, isophthalic acid, a naphthalene dicarboxylic acid or the like, or from C₄-C₁₂ aliphatic dicarboxylic acid compounds such as, for example adipic acid, sebacic acid and the like or from the cycloaliphatic analogs thereof including carboxylic cyclohexane dicarboxylic acid and the like. Preferred copolymers include alkylene terphthalamides derived from one or more alkylene diamines and suitably reactive derivatives of terephthalic acid, optionally further including alkylene adipamides formed from such alkylene diamines and suitably reactive derivatives of adipic acid. Particularly preferred are copolymers comprising hexamethylene terephthalamide, hexamethylene isophthalamide and hexamethylene adipamide in suitable proportions.

Although the molecular weight of the polyamide is not particularly important to the application, generally molding- and extrusion-grade polyamides will be preferred. Such resins may be further described as having inherent viscosities greater than about 0.7, preferably greater than about 0.8, when measured at 30° C in a 60/40 phenol/tetrachloroethylene (TCE) mixture at a concentration of 0.4 g/dl. Although there is no particular upper limit for molecular weight to be suitable for use in these compositions, very high molecular weight polyphthalamides, those with an inherent viscosity as great as 2.0 or even greater, may be extremely difficult to process thermally and hence will not be preferred.

Crystalline or crystallizable polyphthalamides comprising terephthalamide units are known in the art for these purposes, and copolyphthalamides comprising a combination of hexamethylene terephthalamide units and hexamethylene adipamide units, optionally including hexamethylene isophthalamide units, are finding wide acceptance in the art. Particularly desirable for the purposes of the invention are copolyphthalamides comprising at least 40 mole% hexamethylene terephthalamide units, the balance being hexamethylene adipamide units or a mixture thereof with up to about 30 mole% hexamethylene isophthalamide units. Also useful are the crystallizable polyphthalamides comprising 2-methyl-1,5-pentamethylene terephthalamide units. A variety of copolyphthalamides including those described herein as preferred are readily available from commercial sources. Suitable polyphthalamide resins and methods for their preparation are also fully described in the art, for example, in U.S. patents 4,603,166; 4,831,108; 5,112,685 and 4, 163,101, and in European Patent Application 309,095.

The polyphthalamides may be employed singly or in combination, and may further be found useful for producing plateable extruded goods and molded articles when combined with compatible thermoplastics. The aliphatic nylons such as nylon 6, nylon 6,6 and the like are particularly preferred.

For use as plating grade resins, the composition will further include a particulate filler such as reinforcing filler, structural fiber or the like. A variety of fillers are disclosed in the art for use in plateable formulations including calcium silicate, silica, clays, talc, mica, carbon black, titanium dioxide, graphite, alumina trihydrate, sodium aluminum carbonate, barium ferrite, etc. Mineral fillers such as wollastonite are known to be particularly useful in plateable formulations based on aliphatic nylons. Other fillers which may also be found useful are flake, spherical and fibrous particulate fillers and nucleating agents such as talc, mica, titanium dioxide, potassium titanate, silica, kaolin clays, chalk, alumina, mineral fillers and the like. Kaolin clays have been found to be particularly desirable for use with polyphthalamides according to the practice of this invention, and will thus be preferred.

The appropriate filler level will depend on processing techniques and on the intended end use of the resultant product, and may readily be determined by those skilled in the art. To provide plateable resin formulations having good processability and moldability as well as the desired dimensional stability, the polyphthalamide blends of this invention will preferably comprise up to 80%, preferably from about 10 to about 60 wt%, more preferably from about 20 to about 45 wt%, particulate filler, preferably as kaolin clay. Although filler having a particle size in the range of from about 0.05 to about 200 microns, preferably from about 1 to 100 microns, may be employed, the presence of large particulates will tend to impart a surface roughness to the molded article and consequently to the plate surface. The most preferred filler particles for use with the polyphthalamides according to the invention will therefore be small, having a size in the range of from about 0.1 to about 10 microns. As is commonly practiced in the art, the filler may desirably be treated with coupling agents and the like to improve adhesion of the resin matrix and the filler particles.

In addition to polyphthalamide and filler, the formulations will include a minor amount of a silicone oil to improve surface appearance. Generally, any of the silicone oils heretofore employed in the art of plating formulations for such purpose may be employed in the practice of this invention, including those silicone oils represented by the formula: 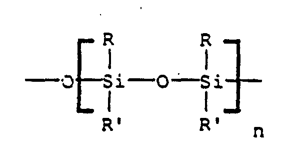 wherein R and R' will be hydrogen or C1-C4 alkyl, and n is an integer selected to provide a molecular weight greater than about 1000. Preferably the silicone oil will be a polydimethyl siloxane wherein R and R' are methyl, having a viscosity in the range of from about 200 to 100,000 centistokes or greater. Suitable silicone oils are readily available from a wide variety of commercial sources and may include, for example, DC200 fluid from Dow Corning.

The amount of silicone oil employed may be varied, but generally from about 0.01 to about 1 parts by weight, preferably from 0.05 to about 0.5 parts by weight, per hundred parts by weight of polyphthalamide in the final composition may be employed. Amounts of from about .03 to about 5 wt% based on polyamide resin content have been disclosed to be useful when added to aliphatic nylons for the purpose of improving plate appearance and adhesion.

The most common failures in plating of thermoplastics are blistering and cracking during thermal cycling. Blistering is typified by separation of the metal plate and plastic from the bulk of the plastic substrate, often producing a visible bubble or blister. Cracking is typically failure of the plastic and a propagation of the crack, often resulting in a crack in the plating as well. These failures may be related to the stresses resulting from differential expansion and contraction of the plate and the thermoplastic, ductility of the substrate and inadequate adhesion between the plate and the substrate. Stresses caused by repeated thermal cycling may exacerbate the problems, producing failed and unacceptable parts.

The adhesion of plating to surfaces of filled polyphthalamide articles is generally inadequate for many applications, and particularly for use in environments where thermal stresses will be encountered, even when a silicone is included as taught in the aliphatic polyamide art. The deficiency in plate adhesion may be overcome by the further addition of an adhesion promoter to the formulation according to the practice of this invention. The substantial improvement in plate adhesion afforded by the adhesion promoter reduces part failure from thermal cycling and stress, permitting the part to undergo further processing steps that require thermal treatments such as, for example, the application and thermal curing of decorative or protective top coatings, plasma-arc spray application of metallic or ceramic materials and the like.

Compositions found useful in improving plate adhesion according to the invention are rubbery olefinic polymers having reactive functionality, and may be more particularly described as selected from the group consisting of functionalized copolymers of ethylene with at least one C₃-C₈ alpha-olefin and functionalized block copolymers having blocks of polymerized vinylaromatic monomer units and polymeric rubber blocks comprising units of at least one of ethylene/propylene, ethylene/butylene and ethylene/pentylene. Particularly suitable as adhesion promoters are carboxyl-modified olefin copolymers obtained, for example, by grafting an ethylene-propylene copolymer or ethylene-alpha olefin-diene monomer terpolymer or the like with a suitable carboxylic compound such as acrylic or methacrylic acid, a carboxylic acid anhydride such as maleic acid, an acid amide such as acrylamide or the like in the presence of a peroxide compound. Alternatively, the carboxyl modification may be introduced by including a suitable copolymerizable carboxylic compound with the olefin components in forming the rubbery copolymer. Functionalized olefinic polymers are known to be generally compatible with polyamides, dispersing readily and forming stable blends having excellent properties.

The rubbery olefinic polymers having reactive functionality that may be suitable for use as synergists in the practice of the invention thus will include ethylene-alpha olefin polymers and ethylene-alpha olefin-diene monomer terpolymers that have been provided with reactive functionality by being grafted or copolymerized with suitable reactive carboxylic acids or their derivatives such as, for example, acrylic acid, methacrylic acid, maleic anhydride or their esters, and will have a tensile modulus up to about 50,000 psi determined according to ASTM D-638. Suitable higher alpha-olefins include C₃ to C₈ alpha-olefins such as, for example, propylene, butene-1, hexene-1 and styrene, with propylene being preferred. Alternatively, copolymers having structures comprising such units may also be obtained by hydrogenation of suitable homopolymers and copolymers of polymerized 1-3 diene monomers. For example, polybutadienes having varying levels of pendant vinyl units are readily obtained, and these may be hydrogenated to provide ethylene-butene copolymer structures. Similarly, hydrogenation of polyisoprenes may be employed to provide equivalent ethylene-isobutylene copolymers.

Suitable dienes for use in the preparation of ethylene-alpha olefin-diene terpolymers are non-conjugated dienes having 4 to about 24 carbon atoms, examples of which include 1,4-hexadiene, dicyclopentadiene and alkylidene norbornenes such as 5-ethylidene-2-norbornene. Mole fractions of ethylene units and higher alpha-olefin units in the ethylene-higher alpha-olefin copolymer rubbers generally range from about 40:60 to about 95:5. Ethylene-propylene copolymers having about 70 to about 95 mole percent ethylene units and about 5 to about 30 mole percent propylene units are preferred among these. In terpolymers comprising polymerized diene monomer, the diene unit content can range up to about 10 mole percent with about 1 to about 5 mole percent being preferred. Also suitable are the corresponding block copolymers comprising two or more polymeric blocks, each formed of one or more monomers selected from ethylene and the higher alpha-olefin. The functionalized polyolefins will generally further comprise about 0.1 to about 10 weight percent functional groups. Specific examples of suitable, commercially-produced functionalized polyolefins include maleic anhydride-functionalized ethylene-propylene copolymer rubber comprising about 0.6 weight percent pendant succinic anhydride groups, identified as EXXELOR® VA 1801 from Exxon Chemical Company, and maleic anhydride-functionalized ethylene-propylenediene monomer terpolymer rubber comprising about 1 weight percent pendant succinic anhydride groups, identified as ROYALTUF 465 from the Uniroyal Company.

Other functionalized rubbery olefinic polymers having reactive functionality known in the art which may also be suitable as synergists include block copolymers having reactive functionality such as, for example, a maleic anhydride-modified block copolymer comprising polymerized styrene blocks and olefinic rubber blocks wherein the polymerized styrene content preferably is about 5 to about 50 weight percent. The rubber blocks of the functionally-modified block copolymer may comprise ethylene/propylene, ethylene/butylene or ethylene/pentylene polymer blocks or combinations thereof. Proportions of ethylene and propylene, butylene or pentylene units in these blocks can vary widely. Such blocks may also contain minor amounts of ethylenic unsaturation, preferably no more than about 15 weight percent unsaturation inasmuch as higher levels may lead to inadequate thermal stability of the functionalized block copolymers. Preferably, the block copolymer is a hydrogenated block copolymer comprising one or more polymerizable vinyl aromatic monomers such as styrene, alpha methylstyrene, vinyl toluene, vinyl naphthalene or the like, and one or more conjugated diene monomers copolymerizable therewith. Suitable copolymers include block copolymers of styrene and 1,3-butadiene or isoprene hydrogenated to have residual unsaturation of up to about 10% of its original unsaturation content. In such hydrogenated styrene-butadiene block copolymers, the rubber blocks comprise ethylene/butylene polymer blocks with proportions of ethylene and butylene units varying depending on the relative levels of 1,2 and 1,4 addition of the diene in the unhydrogenated copolymer. It also is preferred that the pendant succinic anhydride groups result from reaction of such an hydrogenated block copolymer with maleic anhydride. A specific example of a preferred functionalized rubbery impact modifier suitable for use according to the present invention is a styrene-ethylene/butylene-styrene block copolymer with pendant succinic anhydride groups, available commercially as Kraton® FG 1901X rubber from Shell Chemical Company. The modifier may also be described as a maleic anhydride-grafted, hydrogenated styrene-butadiene block copolymer, or as a maleated SEBS. This product contains about 29 weight percent polymerized styrene, about 2 weight percent pendant succinic anhydride groups and has a glass transition temperature of its hydrogenated, polymerized butadiene block of about -42°C.

The amount of carboxyl-modified rubbery olefinic polymer adhesion promoter employed will be a quantity sufficient to synergistically enhance the adhesion between the plating and the surface in the plated polyphthalamide article. Generally the adhesion promoter will comprise from about 1 to about 25 parts by weight, preferably from about 2 to about 15 parts by weight and still more preferably from about 5 to about 12 parts by weight per hundred parts by weight of the polyphthalamide component of the composition. Lower levels are generally ineffective, while at high levels, and particularly above about 25 pbw, the effect does not further improve while the added rubber component tends to detrimentally-affect overall physical properties, particularly modulus.

Generally, any of the methods commonly employed in the art for producing molding and extrusion resin formulations for further molding and processing such as extrusion compounding or the like may be employed for compounding the invented resin formulations. The invented compositions may further include such stabilizers, dyes, pigments, reinforcing fibers, additional particulate fillers and the like as are commonly employed in the art. For example, fibers which may be found suitable as reinforcing agents for such formulations include glass fibers, graphitic carbon fibers, amorphous carbon fibers, synthetic polymeric fibers, aluminum fibers, aluminum silicate fibers, aluminum oxide fibers, titanium fibers, magnesium fibers, rock wool fibers, steel fibers, tungsten fibers, cotton, wool and wood cellulose fibers, fibers formed of silicon carbide, alumina, titania, boron and the like, as well as fibers formed from high temperature engineering resins such as, for example, poly(benzothiazole), poly(benzimidazole), polyarylates, poly(benzoxazole), aromatic polyamides, polyaryl ethers and the like, and may include mixtures comprising two or more such fibers as well as additional particulate fillers. The structural fiber may be employed in the form of chopped or short fibers, flock, fiber pulp, fibrils or the like. Alternatively, the blend may be reinforced with fiber in the form of continuous tows of typically from 500 to 420,000 filaments. as continuous unidirectional tape or as woven cloth for providing laminates and structural composites. For most applications, and particularly for use in fiber-filled, plateable molding resins, the preferred fiber will be glass fiber, more preferably chopped glass fiber, and will be from about 2 to 50 microns, preferably from about 2 to about 20 microns, and more preferably less than about 10 microns, in diameter and generally will be less than about 1/2 inch in length.

The filled polyphthalamides according to the invention have a particularly outstanding balance of mechanical properties including good rigidity and low thermal expansion. Aromatic polyamides are high melt-temperature thermoplastics and, particularly when filled, require elevated temperatures and pressures for successful thermal processing such as by extrusion or injection molding. Although the use of lubricants and processing aids to improve processability is ordinarily widely practiced in the molding and extrusion arts, such additives may affect surface properties and often will detrimentally affect plating character and adhesion, hence such additives will be employed sparingly and with great care and will preferably be avoided where the intended use is for plating purposes.

Plated parts may be prepared from molded parts or extruded goods by a variety of common processes for electroless plating of plastics, including the widely-used commercial processes for chrome-plating engineering plastic articles used in plumbing applications and the like. Generally, such processes involve an etching step with chromic/sulfuric acid, a catalyst deposition step in which palladium is deposited on the plastic surface and an electroless deposition step in which the part is coated with a conductive layer of copper or nickel. The part is then plated electrolytically with one of a number of metal sequences before a chrome layer is applied. For a complete teaching of the process see U.S. Patent No. 3,445,350.

The practice of the invention will be better understood through consideration of the following examples.

### EXAMPLES

Example A hexamethylene terephthalamide-isophthalamide-adipamide terpolymer, mole ratio 65/25/10, having an inherent viscosity of 0.84 dl/g determined at 30 °C in a 60/40 phenol/TCE mixture at a concentration of 0.4 g/dl, a Tg = 126° C, and Tm = 311°C, obtained as Amodel® A1002 polyphthalamide (Amoco Performance Products Inc.), was blended with Translink HF900, an aminosilane-treated kaolin clay having an average particle size of 1.8 microns (Engelhard Industries), DC200 silicone oil (Dow Corning), and Royaltuff 465 (Uniroyal) carboxyl-modified rubbery olefinic polymer adhesion promoter. The dried polymer components and the silicone oil were first mixed in a tumble mixer, together with stabilizers when employed, then fed to the first feed port of a Berstorff 25 mm. twin screw extruder using a nitrogen-purged hopper feeder at a rate of approximately 20 lb/hr. The melt temperatures during the extrusion ranged generally from 285° to about 320°C. The extrudate, after cooling in a water bath, was chopped and then vacuum dried before being injection molded using an Arburg 221E/150 molding machine to form the injection molded test specimens.

Additional plateable formulations comprising 54.4 wt% polyphthalamide, 40.0 wt% filler, 0.1 wt% silicone oil and 5.5 wt% adhesion promoter according to the Example were also molded and tested for mechanical properties, giving the following properties: tensile strength 11.500 psi; tensile elongation 3 %; tensile modulus 780,000 psi; flexural strength 20.000 psi; flexural modulus 740,000 psi; Izod impact 0.85 ft lb/in notch; and HDT (264 psi) 266° F. The molded specimens exhibited a low mold shrinkage, 1.2%, as the result of the high filler level, and had a specific gravity of 1.48.

Control Example A Following substantially the procedures and employing the components as set forth in the Example, a control blend containing 59.9 wt% polyphthalamide, 40.0 wt% kaolin clay and 0.1 wt% silicone oil was prepared and molded to provide test specimens omitting the adhesion promoter for comparison purposes.

Control Example B Following substantially the procedures and employing the components as set forth in the Example, a control blend containing 60 wt% polyphthalamide and 40.0 wt% kaolin clay was prepared and molded to provide test specimens omitting the silicone oil and the adhesion promoter for comparison purposes.

Injection molded test specimens in the form of 4"x4"x 1" plaques comprising the polyphthalamide formulation of the invention and the control formulations were identically chrome-plated in a commercial plating facility using the standard electroless plating and electrodeposition processes described to provide chrome-plated'resin plaques. Generally described, the plaques were cleaned, etched and given a coating of catalyst followed by an electroless plating of copper or nickel according to common practice in the plating art. The articles were then given additional metal coatings in the sequence nickel, copper, nickel by electrodeposition, with a final coat of chromium.

The 90° plate adhesion for the plaques was determined by the industry standard method identified as ISO 4578:1990(e). The plate adhesion properties for the test specimen of the example according to the invention and for the two control specimens were:

| Specimen | 90° adhesion | appearance | composition |
|---|---|---|---|
| Example: | 3.5 lb/in width | smooth | invented formulation |
| Control A: | 1.6 lb/in width | smooth | omit adhesion promoter |
| Control B: | 1.9 lb/in width | blistering | omit silicone, adhesion promoter |

It will be apparent that adding silicone alone (Control A) did improve plating appearance, but actually reduced the plate adhesion somewhat over the filled resin alone (Control A). In view of the teaching of the prior art that plate adhesion for aliphatic nylon formulations such as wollastonite-filled nylon 6,6 is improved by the adding of the silicone oil, the reduction in plate adhesion for polyphthalamides is surprising.

Plate adhesion to the polyphthalamide formulation was more than doubled by the further addition of a functionalized rubbery olefinic polymer at a level of 10 wt% based on resin components as an adhesion promoter. The presence of the small amount of silicone oil is necessary to provide improved plating appearance, but is shown to be ineffective alone in promoting plate adhesion.

Additional molded and plated specimens according to the Example were prepared and then given an epoxy resin top coating by coating the specimen with a commercial powder coating formulation of epoxy resin, then thermally fusing and curing the coating by heating in an oven at a temperature in the range 140-180° C according to standard commercial coating practice. On cooling, the coated article maintained integrity without blister or loss of adhesion. A control specimen comprising only polyphthalamide, silicone oil and filler exhibited a high degree of blistering after undergoing the same coating process.

The invention will thus be understood to be a plateable composition having, when plated, improved plating adhesion, said composition comprising a filled polyphthalamide, a minor amount of silicone oil as an aid to improve plating appearance, and functionalized rubbery olefin polymer as an adhesion promoter to improve plate adhesion. More particularly, the composition will comprise up to 80 wt%, preferably from about 10 to about 60 wt%, based on total composition, of a mineral filler such as kaolin clay, from about 0.01 to about 1 wt%, based on weight of the resin components, of a silicone oil, and an amount sufficient to improve plating adhesion, preferably from about 1 to about 20 wt%, more preferably from about 2 to about 15 wt%, of the adhesion promoter. The preferred adhesion promoter will be a carboxyl-modified rubbery olefin polymer and more preferably an ethylene-alpha olefin polymer or ethylene-alpha olefin-diene monomer terpolymer having attached thereto by grafting or copolymerization from about 0.1 to about 10 wt% carboxylic acid groups or derivatives as reactive functionality.

It will be understood that these formulations may further contain additional fillers, reinforcing fibers, pigments, dyes, stabilizers and the like as commonly practiced in the resin compounding art. The compositions set forth by way of example are provided for purposes of illustration and are not intended thereby to be limiting of the invention, which will be fully defined and described by the appended claims.

## Claims

1. A filled, thermoplastic polyamide composition comprising:-
100pbw polyphthalamide,
from .01 to 1pbw silicon oil,
from 1 to 25 pbw carboxyl-modified rubbery olefin polymer, and from 10 to 60 wt% based on the total weight of the composition, of a mineral filler.

2. A composition according to Claim 1 wherein said carboxyl-modified rubbery olefin polymer is selected from functionalized co-polymers of ethylene with at least one C₃-C₈ alpha-olefin and functionalized block co-polymers having blocks of polymerised vinylaromatic monomer units and polymeric rubber blocks comprising units of at least one member selected from ethylene/propylene, ethylene/butylene and ethylene/pentylene,

3. A composition according to Claim 1 or 2 wherein said carboxyl-modified rubbery olefin polymer is selected from maleated ethylene-propylene polymer, maleated SEBS block polymer and maleated EPDM.

4. A composition according to any of Claims 1-3 wherein said polyphthalamide comprises:- 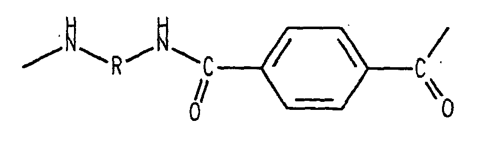 wherein R comprises at least one C₄-C₁₄ alkylene radical.

5. Use of a composition according to any of Claims 1-4 for metal plating.

6. A metal plated article comprising a composition according to any of Claims 1-4 adhered to a metal plate.

7. A metal plated article formed of a composition according to any of Claims 1-4 having an adherent metal plating on at least one surface thereof.

8. A method of plating a polyamide composition comprising applying to a composition according to any of Claims 1-4 a metal plating.

9. A method for improving adhesion between a metal plate and a composition comprising a polyphthalamide, a particulate filler and silicone oil, said method comprising the steps of compounding said polyphthalamide composition with an adhesion-promoting amount of a carboxyl-modified rubbery olefin polymer, moulding an article therefrom and applying a metal plating to said article.

10. A method according to Claim 9 wherein said carboxyl-modified rubbery olefin polymer is selected from maleated ethylene-propylene polymer, maleated SEBS block polymer and maleated EPDM.

## Patentansprüche

1. Eine gefüllte, thermoplastische Polyamidzusammensetzung, welche umfaßt:
100 pbw Polyphthalamid, von 0,01 bis 1 pbw Silikonöl, von 1 bis 25 pbw Carboxyl-modifiziertes gummiartiges Olefinpolyer und von 10 bis 60 Gew.-%, basierend auf dem Gesamtgewicht der Zusammensetzung, eines Mineralfüllstoffs.

2. Eine Zusammensetzung nach Anspruch 1, wobei das Carboxyl-modifizierte gummiartige Olefinpolymer ausgewählt ist aus funktionalisierten Copolymeren des Ethylens mit wenigstens einem C₃-C₉-Alphaolefin und funktionalisierten Block-Copolymeren mit Blöcken aus polymerisierten vinylaromatischen Monomereinheiten und polymeren Gummiblöcken, die Einheiten aus wenigstens einem Mitglied, ausgewählt aus Ethylen/Propylen, Ethylen/Butylen und Ethylen/Pentylen, umfassen.

3. Eine Zusammensetzung nach Anspruch 1 oder 2, wobei das Carboxyl-modifizierte gummiartige Olefinpolymer ausgewählt ist aus maleiertem Ethylen-Propylenpolymer, maleiertem SEBS-Blockpolymer und maleiertem EPDM.

4. Eine Zusammensetzung nach einem der Ansprüche 1-3, wobei das Polyphthalamid umfaßt: 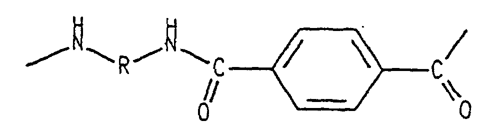 wobei R wenigstens ein C₄-C₁₄-Alkylenradikal umfaßt.

5. Die Verwendung einer Zusammensetzung nach einem der Ansprüche 1-4 zum Plattieren mit Metall.

6. Ein metallplattierter Artikel, der eine Zusammensetzung nach einem der Ansprüche 1-4, angehaftet an eine Metallplatte, umfaßt.

7. Ein metallplattierter Artikel, gebildet aus einer Zusammensetzung nach einem der Ansprüche 1-4, mit einer anhaftenden Metallplattierung auf wenigstens einer seiner Oberflächen.

8. Ein Verfahren, eine Polyamidzusammensetzung zu plattieren, welches das Anwenden eines Metallplattierens auf eine Zusammensetzung nach einem der Ansprüche 1-4 umfaßt.

9. Ein Verfahren zur Verbesserung der Anhaftung zwischen einer Metallplatte und einer Zusammensetzung, die ein Polyphthalamid, einen bestimmten Füllstoff und Silikonöl umfaßt, wobei das Verfahren die Schritte des Verbindens der Polyphthalamidzusammensetzung mit einer anhaftungsfördernden Menge eines Carboxylmodifizierten gummiartigen Olefinpolymers, das Formen eines Artikels hieraus und das Anwenden einer Metallplattierung auf diesen Artikel umfaßt.

10. Ein Verfahren nach Anspruch 9, wobei das Carboxyl-modifizierte gummiartige Olefinpolymer ausgewählt ist aus maleiertem Ethylen-Propylenpolymer, maleiertem SEBS-Blockpolymer und maleiertem EPDM.

## Revendications

1. Composition thermoplastique de polyamide contenant des charges, comprenant
- 100 parties en poids de polyphtalamide,
- de 0,01 à 1 partie en poids d'huile de silicone,
- de 1 à 25 parties en poids de polymère oléfinique caoutchouteux modifié par des carboxyles, et
de 10 à 60 % en poids par rapport au poids total de la composition, d'une charge minérale.

2. Composition selon la revendication 1, dans laquelle ledit polymère oléfinique caoutchouteux modifié par des carboxyles est choisi parmi des copolymères fonctionnalisés de l'éthylène avec au moins une oléfine-alpha C₃-C₈ et des copolymères à blocs fonctionnalisés ayant des blocs d'unités monomères vinylaromatiques polymérisés et des blocs de caoutchouc polymère comprenant des unités d'au moins un membre choisi parmi l'éthylène/propylène, l'éthylène/butylène et l'éthylène/pentylène.

3. Composition selon la revendication 1 ou la revendication 2, dans laquelle ledit polymère oléfinique caoutchouteux modifié par des carboxyles est choisi au sein du groupe comprenant les polymères éthylène-propylène maléatés, les polymères à blocs SEBS maléatés et les EPDM maléatés.

4. Composition selon l'une quelconque des revendications 1 à 3, dans laquelle ledit polyphtalamide comprend 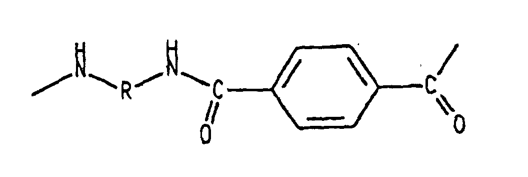 où R comprend au moins un radical alkylène C₄-C₁₄.

5. Utilisation d'une composition selon l'une quelconque des revendications 1 à 4 pour le revêtements par des métaux.

6. Objet à revêtement métallique comprenant une composition selon l'une quelconque des revendications 1 à 4, adhérant au revêtement métallique.

7. Objet à revêtement métallique formé d'une composition selon l'une quelconque des revendications 1 à 4, ayant un revêtement métallique adhérant à au moins une de ses faces.

8. Technique de revêtement d'une composition polyamide comprenant l'application à une composition selon l'une quelconque des revendications 1 à 4, d'un revêtement métallique.

9. Technique d'amélioration de l'adhésion entre un revêtement métallique et une composition comprenant un polyphtalamide, une charge particulaire et de l'huile de silicone, ladite technique comprenant les étapes d'incorporation à ladite composition de polyphtalamide d'une quantité assurant la promotion de l'adhésion, d'un polymère oléfinique caoutchouteux modifié par des carboxyles ; de moulage d'un objet à partir du mélange obtenu ; et d'application d'un revêtement métallique audit objet.

10. Technique selon la revendication 9, dans laquelle ledit polymère oléfinique caoutchouteux modifié par des carboxyles est choisi au sein du groupe comprenant les polymères éthylène-propylène maléatés, les polymères à blocs SEBS maléatés et les EPDM maléatés.
